# FASCICULE DE BREVET EUROPEEN

(11) **EP 2 266 829 B1**
(45) Date de publication et mention de la délivrance du brevet: **25.11.2015**
(21) Numéro de dépôt: 10166080.1
(22) Date de dépôt: 15.06.2010
(51) Int. Cl.: B60K 5/12, F16F 1/38, F16F 1/387

(54) **Support antivibratoire à limitation de mouvement**
Schwingungsdämpfungsvorrichtung mit begrenztem Hub
Vibration isolator with limited movement

(30) Priorité: 17.06.2009 FR 0954086
(43) Date de publication de la demande: 29.12.2010
(73) Titulaire: HUTCHINSON, 75008 Paris (FR)
(72) Inventeur: Visage, Hervé, 28200, Chateaudun (FR); Jules, Christophe, 28200, Chateaudun (FR); Richard, Pascal, 28220, Cloyes sur le Loir (FR)
(74) Mandataire: Cabinet Plasseraud

(56) Documents cités:
- EP-A1- 1 026 420
- EP-A2- 0 256 762

## Description

La présente invention est relative aux supports antivibratoires à limitation de mouvement, destinés par exemple à supporter la boîte de vitesse d'un véhicule automobile.

Plus particulièrement, l'invention concerne un support antivibratoire destiné à relier des premier et deuxième éléments de véhicule (par exemple une partie du bloc motopropulseur et la caisse d'un véhicule) aux fins d'amortissement et de support, comprenant :
- une première armature comportant une tête rigide et un organe de liaison rigide destiné à être fixé au premier élément de véhicule, l'organe de liaison étant fixé rigidement à ladite tête par une liaison admettant une certaine tolérance de positionnement relatif entre ladite tête et ledit organe de liaison au moins selon une première direction (il s'agit ici d'une tolérance de positionnement avant mise en oeuvre de la liaison entre les deux pièces : une fois cette liaison mise en oeuvre, les deux pièces ne sont normalement plus mobiles l'une par rapport à l'autre),
- une deuxième armature rigide destinée à être fixée au deuxième élément de véhicule,
- un corps en élastomère reliant la tête de la première armature à la deuxième armature et adapté pour supporter une charge statique (par exemple une partie du poids du bloc motopropulseur du véhicule) appliquée à la première armature selon une deuxième direction sensiblement perpendiculaire à la première direction et pour permettre des mouvements relatifs entre les première et deuxième armatures au moins selon les première et deuxième directions,
ladite deuxième armature étant adaptée pour coopérer par butée avec la première armature selon la première direction.

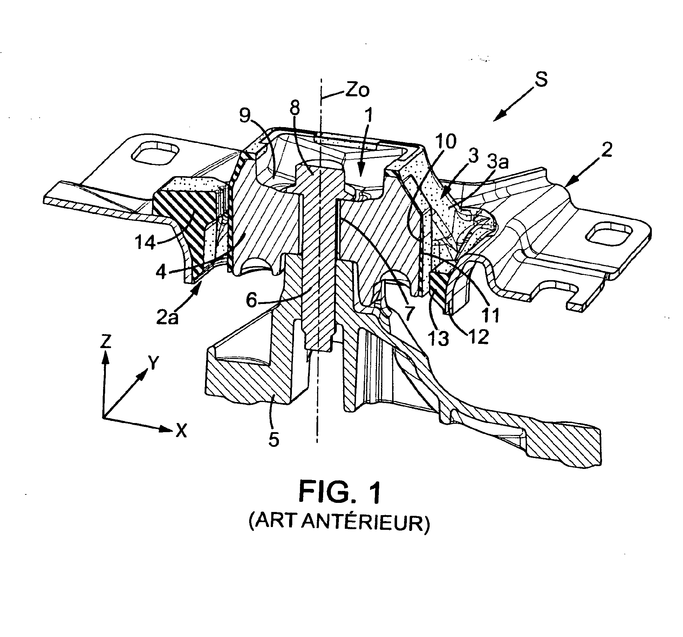

Dans les supports antivibratoires connus de ce type, dont un exemple est représenté sur la figure 1, la deuxième armature est adaptée pour buter contre la tête de la première armature pour limiter les mouvements relatifs entre les première et deuxième armatures selon la deuxième direction.

Cette coopération par butée peut générer d'importantes sollicitations en cisaillement selon le deuxième axe, qui sont appliquées à la fixation entre la tête et l'organe de liaison de la première armature (par exemple une liaison par vis) en risquant de l'endommager.

De plus, ces sollicitations en cisaillement peuvent désolidariser au moins partiellement la tête et l'organe de liaison de la première armature, notamment en provoquant des glissements entre la tête et l'organe de liaison selon la deuxième direction, du fait de la tolérance de positionnement entre ces deux pièces. Par exemple lorsque ces deux pièces sont fixées entre elles par une vis s'étendant selon la première direction et présentant un certain jeu selon le deuxième axe par rapport à la tête ou à l'organe de liaison, l'organe de liaison peut ainsi glisser par rapport à la tête, ces deux pièces n'étant immobilisées selon le deuxième axe que par le serrage de la vis.

Le document EP-A-1. 026. 420 décrit un autre support antivibratoire similaire.

La présente invention a notamment pour but de pallier les inconvénients susmentionnés.

A cet effet, selon l'invention, un support antivibratoire du genre en question est **caractérisé en ce que** la tête de la première armature comporte une butée déformable qui est interposée entre la deuxième armature et l'organe de liaison selon la première direction, la butée déformable étant adaptée pour ne pas gêner la tolérance de positionnement relatif entre la tête de la première armature et l'organe de liaison, et ladite butée déformable étant adaptée pour buter contre la deuxième armature en prenant appui contre l'organe de liaison pour limiter les mouvements relatifs entre les première et deuxième armatures selon ladite première direction.

Grâce à ces dispositions, les efforts générés par la limitation de mouvement selon la première direction, sont transmis directement entre l'organe de liaison et la deuxième armature, sans générer d'effort de cisaillement entre la tête de la première armature et l'organe de liaison, de sorte que la butée ne génère pas d'effort de cisaillement dans la fixation entre la tête et l'organe de liaison de la première armature. De ce fait, la liaison entre la tête de la première armature et l'organe de liaison peut éventuellement être dimensionnée pour des efforts moins importants que dans l'art antérieur d'où un gain en coût en en poids.

De plus, du fait que la butée déformable est solidaire de la tête de la première armature, elle ne gêne pas la fixation éventuelle de l'organe de liaison sur le premier élément de véhicule (par exemple le bloc motopropulseur du véhicule) avant fixation dudit organe de liaison sur la tête de la première armature.

Enfin, du fait du caractère déformable de la butée, elle peut à la fois venir en appui contre l'organe de liaison lorsqu'elle bute contre la deuxième armature et rester compatible avec la tolérance de positionnement entre la tête de la première armature et l'organe de liaison, laquelle tolérance de positionnement permet par exemple d'assembler sans difficulté la tête de la première armature et l'organe de liaison lors du montage du groupe motopropulseur sur une caisse de véhicule, lorsque l'on a préalablement fixé d'une part, l'organe de liaison sur le groupe motopropulseur, et d'autre part la deuxième armature sur la caisse.

Dans divers modes de réalisation du support antivibratoire selon l'invention, on peut éventuellement avoir recours en outre à l'une et/ou à l'autre des dispositions suivante :
- la butée déformable est réalisée au moins partiellement en matière synthétique ;
- la butée déformable est surmoulée sur la tête de la première armature ;
- la butée déformable est réalisée au moins partiellement en aluminium ;
- la butée déformable comporte une portion de tête solidaire de la tête de la première armature et une portion tombante qui s'étend selon la deuxième direction vers l'organe de liaison à partir de la portion de tête jusqu'à une portion de butée interposée entre l'organe de liaison et la deuxième armature selon la première direction ;
- la portion tombante de la butée déformable est flexible selon la première direction et ladite portion de butée est moins déformable que la portion tombante dans la première direction ;
- la portion tombante de la butée déformable comporte au moins une alvéole permettant à ladite portion tombante d'être flexible selon la première direction ;
- un jeu est ménagé entre la butée déformable et l'organe de liaison dans la première direction ;
- l'organe de liaison est en contact permanent avec la butée déformable et exerce une déformation sur ladite butée déformable ;
- la liaison entre la tête de la première armature et l'organe de liaison comporte au moins une vis s'étendant selon la deuxième direction, ladite vis traversant avec jeu radial au moins une pièce choisie parmi la tête de la première armature et l'organe de liaison, l'organe de liaison et la tête de la première armature étant solidarisés rigidement ensemble par serrage de la vis ;
- la deuxième armature est annulaire et présente une ouverture traversée par la première armature selon la deuxième direction, ladite deuxième armature présentant au moins un rebord qui délimite au moins partiellement ladite ouverture et contre lequel bute ladite butée déformable ;
- ledit rebord comporte au moins une contrebutée en élastomère contre laquelle bute ladite butée déformable.

D'autres caractéristiques et avantages de l'invention apparaîtront au cours de la description suivante de deux de ses formes de réalisation, données à titre d'exemples non limitatifs, en regard des dessins joints.

Sur les dessins :
- la figure 1 est une vue en perspective et en coupe verticale d'un support antivibratoire de l'art antérieur,
- les figures 2 et 3 sont des vues en perspective d'un support antivibratoire selon une première forme de réalisation de l'invention, respectivement en vue de trois quarts de dessus et de dessous,
- la figure 4 est une vue en coupe verticale du support antivibratoire des figures 2 et 3, la coupe étant prise selon la ligne IV-IV de la figure 2,
- la figure 5 est une vue en coupe verticale et en perspective du support antivibratoire des figures 2 et 3, la coupe étant prise selon la ligne V-V de la figure 3,
- la figure 6 est une vue de détail montrant une partie du support antivibratoire de la figure 5, le support antivibratoire étant vu légèrement de dessous en projection dans un plan contenant l'axe X mais incliné par rapport à l'axe Z,
- la figure 7 est une vue similaire à la figure 6, en projection dans le plan de coupe verticale (X, Z), le support antivibratoire étant vu dans une position de butée,
- et la figure 8 est une vue en coupe verticale d'un support antivibratoire selon une deuxième forme de réalisation de l'invention, la coupe étant prise dans le même plan de coupe que la figure 5.

Sur les différentes figures, les mêmes références désignent des éléments identiques ou similaires.

La figure 1 représente un support antivibratoire S de l'art antérieur, qui comporte une première armature 1 rigide, généralement métallique, une deuxième armature 2 rigide, également généralement métallique (réalisée par exemple en tôle d'acier), et un corps en élastomère 3 reliant les deux armatures 1, 2.

La première armature 1 est destinée à être fixée à un premier élément de véhicule, par exemple une partie du bloc motopropulseur du véhicule (non représenté) et plus particulièrement la boîte de vitesses du véhicule.

La deuxième armature 2 est destinée à être fixée à un deuxième élément de véhicule, par exemple à la caisse du véhicule (non représentée).

Le corps en élastomère 3, quant à lui, est adapté pour supporter la charge statique représentée par le poids d'une partie du bloc motopropulseur du véhicule qui est suspendu à la première armature 1, et pour permettre des débattements entre les deux armatures 1, 2 parallèlement à une première direction horizontale X, parallèlement à une deuxième direction verticale Z, et le cas échéant parallèlement à une troisième direction Y, horizontale et perpendiculaire aux directions X, Z. A cet effet, le corps en élastomère est surmoulé et adhérisé sur les deux armatures 1, 2 et comporte par exemple deux bras 3a formant ensemble un V inversé, qui soutiennent la première armature.

La première armature 1 peut être composée de deux pièces assemblées l'une à l'autre, en l'occurrence une tête rigide 4, généralement métallique (réalisée par exemple en aluminium ou en fonte), qui est surmoulée par le corps en élastomère 3, et un organe de liaison 5 (réalisé par exemple en aluminium ou en fonte) auquel est suspendue la boîte de vitesses du bloc motopropulseur du véhicule. L'organe de liaison 5 est fixé à la tête 4 par une vis 6 qui est vissée dans l'organe de liaison 5. Cette vis s'étend selon un axe central Z0 vertical et traverse, avec un certain jeu radial, un trou 7 percé dans 1 tête 4.

La tête 8 de la vis 6 est serrée en appui contre la surface supérieure 9 de la tête 4, en immobilisant totalement l'organe de liaison 5 par rapport à la tête 4 après serrage de la vis.

Le support antivibratoire S est généralement initialement séparé en deux parties, savoir :
- d'une part, la deuxième armature 2, le corps en élastomère 3 et la tête 4 qui sont initialement fixés sur la caisse du véhicule,
- et d'autre part, l'organe de liaison 5 qui est initialement fixé sur la boîte de vitesse du bloc motopropulseur du véhicule.

Lors de l'assemblage du bloc motopropulseur du véhicule dans la caisse, l'organe de liaison 5 est positionné sous la tête 4 et la vis 6 est vissée dans l'organe de liaison 5. Lors de cette mise en place, le jeu radial entre la vis 6 et le trou traversant 7 de la tête 4 permet une certaine tolérance de positionnement relatif entre l'organe de liaison 5 et la tête 4 selon les directions X, Y.

Une fois le bloc motopropulseur du véhicule monté sur la caisse, il est supporté partiellement par le support antivibratoire S, et les débattements relatifs entre les deux armatures 1, 2, qui peuvent être dus soit aux fonctionnement du moteur, soit au roulage du véhicule, sont limités notamment dans la première direction X par butée de la surface latérale extérieure 10 de la tête 4 (le cas échéant recouvert par une fine couche d'élastomère 11 moulé d'une seule pièce avec le corps en élastomère 3) contre des contrebutées 13, 14, solidaires de la deuxième armature 2.

Dans l'exemple de la figure 1, la deuxième armature 2 est une pièce de tôle découpée et mise en forme qui présente une ouverture centrale 2a traversée par la première armature 1. Cette ouverture centrale 2a est formée notamment par une paroi rabattue 12 de la deuxième armature 2, qui s'étend sensiblement vers le bas en forme de puits et sur laquelle peuvent être par exemple surmoulées les contrebutées 13, 14, lesquelles contrebutées peuvent notamment être des blocs d'élastomère moulés d'une seule pièce avec le corps en élastomère 3.

Lorsque la tête 4 de la première armature 1 bute contre les contrebutées 13, 14 et notamment contre la contrebutée 13, la tête 4 peut avoir tendance à glisser par rapport à l'organe de liaison 5 malgré le serrage de la vis 6, compte tenu du jeu radial existant entre le trou 7 et la vis 6.

Il peut en résulter une désolidarisation progressive entre la tête 4 de la première armature et l'organe de liaison 5, ce qui est évité par la présente invention.

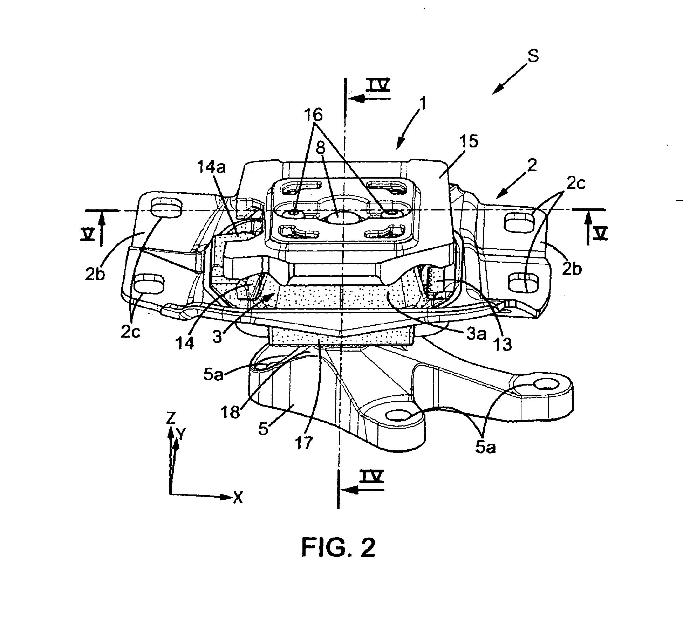

Une première forme de réalisation de l'invention est représentée sur les figures 2 à 5, qui montrent un support antivibratoire S présentant un certain nombre de caractéristiques communes avec le support antivibratoire S de l'art antérieur représenté sur la figure 1.

C'est ainsi que le support antivibratoire S des figures 2 à 4, comme celui de la figure 1, comporte une première armature 1 rigide, généralement métallique, une deuxième armature 2 rigide, également généralement métallique (réalisée par exemple en tôle d'acier), et un corps en élastomère 3 reliant les deux armatures 1, 2.

La première armature 1 est, comme dans le cas du support de la figure 1, destinée à être fixée à un premier élément de véhicule, par exemple une partie du bloc motopropulseur du véhicule (non représenté) et plus particulièrement la boîte de vitesses du véhicule. La deuxième armature 2 est destinée à être fixée à un deuxième élément de véhicule, par exemple à la caisse du véhicule (non représentée).

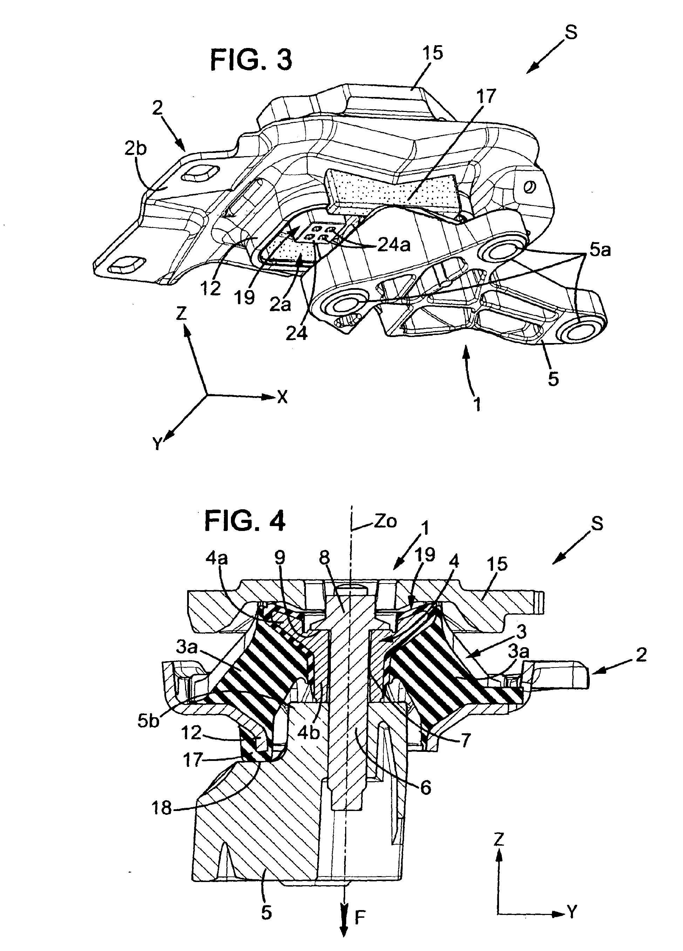

Le corps en élastomère 3, comme dans le cas du support de la figure 1, est adapté pour :
- supporter une charge statique F (figure 4) représentée par le poids d'une partie du bloc motopropulseur du véhicule qui est suspendu à la première armature 1,
- et permettre des débattements entre les deux armatures 1, 2 parallèlement à une première direction horizontale X, parallèlement à une deuxième direction verticale Z, et le cas échéant parallèlement à une troisième direction Y, horizontale et perpendiculaire aux directions X, Z.

A cet effet, le corps en élastomère est surmoulé et adhérisé sur les deux armatures 1, 2 et comporte par exemple deux bras 3a formant ensemble un V inversé (figure 4), qui soutiennent la première armature, comme dans le cas de la figure 1.

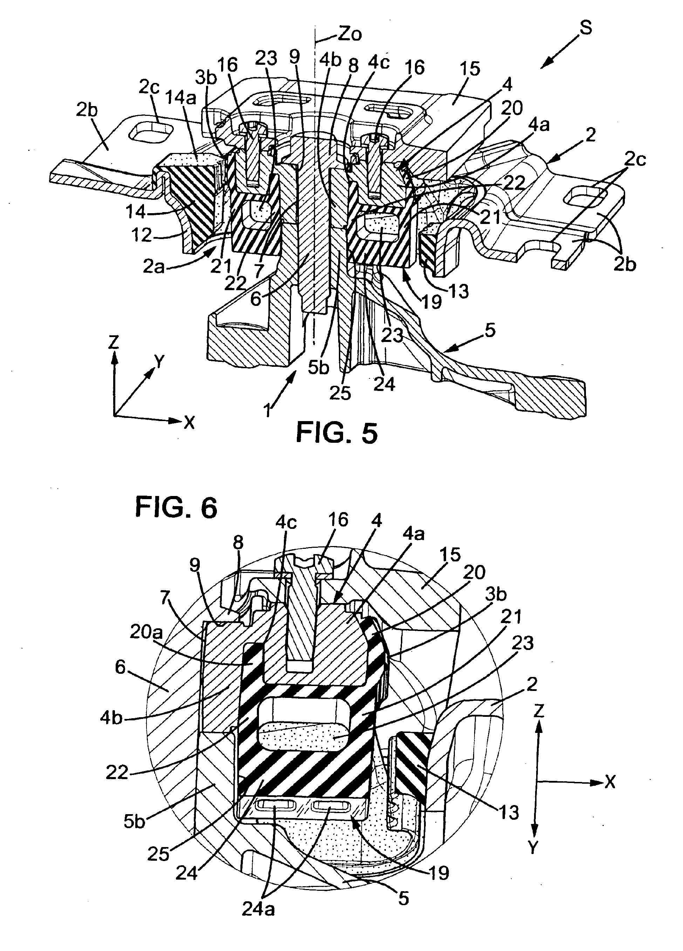

La première armature 1 peut être composée de deux pièces assemblées l'une à l'autre, en l'occurrence :
- une tête rigide 4, généralement métallique (réalisée par exemple en aluminium ou en fonte), qui peut comporter par exemple :
   - une partie supérieure élargie 4a solidaire du corps en élastomère 3,
   - une partie centrale 4b moins large que la partie supérieure 4a et s'étendant vers le bas à partir de la parie supérieure 4a, des rainures 4c parallèles à la troisième direction Y étant le cas échéant creusées dans la face inférieure de la partie supérieure élargie 4a de part et d'autre de ladite partie centrale 4b (voir la figure 5),
- et un organe de liaison 5 (réalisé par exemple en aluminium ou en acier) qui n'est pas directement lié au corps en élastomère 3 et auquel est suspendue la boîte de vitesses du bloc motopropulseur du véhicule, par exemple par des vis (non représentées) passant dans des trous 5a de l'organe de support.

Comme dans le support S de la figure 1, l'organe de liaison 5 est fixé à la tête 4 par une vis 6 qui est vissée dans une partie d'extrémité 5b supérieure de l'organe de liaison 5. Cette vis s'étend selon un axe central Z0 vertical et traverse, avec un certain jeu radial (par exemple de l'ordre de 0,5 à 1 mm), un trou 7 percé dans la tête 4, par exemple en traversant la partie centrale 4b.

La tête 8 de la vis 6 est serrée en appui contre la surface supérieure 9 de la tête 4, en immobilisant totalement l'organe de liaison 5 par rapport à la tête 4 après serrage de la vis.

Comme dans le cas de la figure 1, la deuxième armature 2 est une pièce de tôle découpée et mise en forme qui présente une ouverture centrale 2a traversée par la première armature 1 et par exemple deux ailes opposées 2b sensiblement horizontales qui sont adaptées pour reposer sur une partie de la caisse du véhicule et y être fixées par des vis (non représentées) traversant des trous 2c ménagés dans ces ailes.

L'ouverture centrale 2a est formée notamment par une paroi annulaire rabattue 12 de la deuxième armature 2, qui s'étend sensiblement vers le bas en formant un puits et sur laquelle est surmoulé est adhérisé le corps en élastomère. Sur cette paroi rabattue 12 peuvent être par exemple surmoulées des contrebutées 13, 14 orientées vers l'intérieur (c'est-à-dire vers la première armature 1), lesquelles contrebutées peuvent notamment être des blocs d'élastomère moulés d'une seule pièce avec le corps en élastomère 3 (voir la figure 5).

Comme dans le cas de la figure 1, le support antivibratoire S est généralement initialement séparé en deux parties, savoir :
- d'une part, la deuxième armature 2, le corps en élastomère 3 et la tête 4 qui sont initialement fixés sur la caisse du véhicule,
- et d'autre part, l'organe de liaison 5 qui est initialement fixé sur la boîte de vitesse du bloc motopropulseur du véhicule.

Lors de l'assemblage du bloc motopropulseur du véhicule dans la caisse, l'organe de liaison 5 est positionné sous la tête 4 et la vis 6 est vissée dans l'organe de liaison 5. Lors de cette mise en place, le jeu radial entre la vis 6 et le trou traversant 7 de la tête permet une certaine tolérance de positionnement relatif entre l'organe de liaison 5 et la tête 4 selon les directions X, Y.

Une fois le bloc motopropulseur du véhicule monté sur la caisse, il est supporté notamment par le support antivibratoire S, et lors du fonctionnement du véhicule, les deux armatures 1, 2 subissent des débattements relatifs dans les trois directions X, Y Z, notamment dans les directions X et Z.

Les débattements de la première armature 1 par rapport à la deuxième armature 2 dans la deuxième direction Z peuvent être limités par exemple :
- vers le bas, par une plaque de butée 15 rigide, réalisée par exemple en métal, qui est fixée par des vis 16 ou autres, sur la face supérieure de la tête 4, de part et d'autre de la vis 6 susmentionnée ; cette plaque de butée 15 peut par exemple coopérer par butée avec la deuxième armature 2, le cas échéant avec interposition de contrebutées en élastomère solidaires de la deuxième armature 2 (la plaque de butée 15 peut ainsi coopérer notamment avec la face supérieure 14a de la butée 14 susmentionnée, bien visible sur la figure 5),
- et vers le haut, par butée de l'organe de liaison 5 contre la deuxième armature, et notamment contre une butée d'élastomère 17 qui peut par exemple être moulée d'une seule pièce avec le corps en élastomère 3 et qui recouvre le bord inférieur de la paroi rabattue 12 en regard d'une face de contrebutée 18 sensiblement horizontale appartenant à l'organe de liaison 5.

Les débattements de la première armature 1 par rapport à la deuxième armature 2 dans la troisième direction Y peuvent être limités par exemple par butée de la partie d'extrémité 5b de l'organe de liaison contre la paroi rabattue 12 de la deuxième armature, avec interposition des parties inférieures des bras 3a du corps en élastomère (voir la figure 4).

Par ailleurs, comme on peut le voir sur les figures 5 et 6, les débattements relatifs entre les deux armatures 1, 2 sont limités, dans la première direction X, par une butée déformable 19 que comporte la tête 4 et qui coopère par butée contre la paroi rabattue 12 de la deuxième armature, et plus particulièrement contre les contrebutées 13, 14 susmentionnées qui sont solidaires de cette paroi rabattue 12.

Comme on peut le voir sur les figures 4 et 5, la butée déformable 19 peut présenter par exemple une forme annulaire et entourer la tête 4. Plus particulièrement, la butée déformable 19 peut être réalisée en matière thermoplastique (par exemple en polyamide 6-6 renforcée ou non par des inserts ou par des fibres, et peut comporter une portion de tête 20 qui est surmoulée sur la partie supérieure élargie 4a de la tête 4 en recouvrant cette partie supérieure élargie 4a radialement vers l'extérieur et éventuellement partiellement vers le haut. Cette portion de tête 20 de la butée déformable 19 peut éventuellement comporter également une partie 20a pénétrant dans la rainure 4c qui est formée dans la face inférieure de la tête élargie 4a.

Comme on peut le voir sur les figures 5 et 6, à partir de la portion de tête 20, chacune des deux parties diamétralement opposées de la butée déformable 19 qui sont alignées selon la première direction X, se prolongent vers le bas, c'est-à-dire vers l'organe de liaison 5, par une portion flexible tombante formée par deux parois flexibles 21, 22 s'étendant chacune dans un plan (Y, Z). L'une 21 de ces parois est disposée au voisinage de la partie centrale 4b de la tête 4 et l'autre 22 de ces parois est disposée vers l'extérieur, c'est-à-dire proche de la contrebutée correspondante 13, 14.

Ces parois flexibles 21, 22 délimitent entre elles une alvéole 23 qui traverse la butée déformable 19 selon la troisième direction Y, en facilitant ainsi les déformations de la partie tombante 21-23.

Lesdites parois flexibles 21, 22 s'étendent jusqu'à une portion de butée 24 relativement massive, qui est moins déformable que les parois 21, 22 dans la première direction X. Cette portion de butée 24 peut néanmoins éventuellement être ajourée par des alvéoles 24a formées par exemple dans la face inférieure de la portion de butée 24 de façon à maîtriser la raideur de cette portion de butée 24 dans la première direction X (voir les figures 3 et 6).

Chaque portion de butée 24 présente une face intérieure 25 qui est disposée en regard de la partie d'extrémité 5b de l'organe de liaison et est séparée de cette partie d'extrémité 5b par un faible jeu, par exemple de l'ordre de 0,2 à 1 mm. Ainsi, la présence de la butée 19 ne limite pas les tolérances de positionnement entre la tête 4 et l'organe de liaison 5 lors de l'assemblage de ces deux pièces.

Chaque portion de butée 24 de la butée déformable 19 est directement interposée entre la contrebutée correspondante 13, 14 et la partie d'extrémité 5b de l'organe de liaison 5.

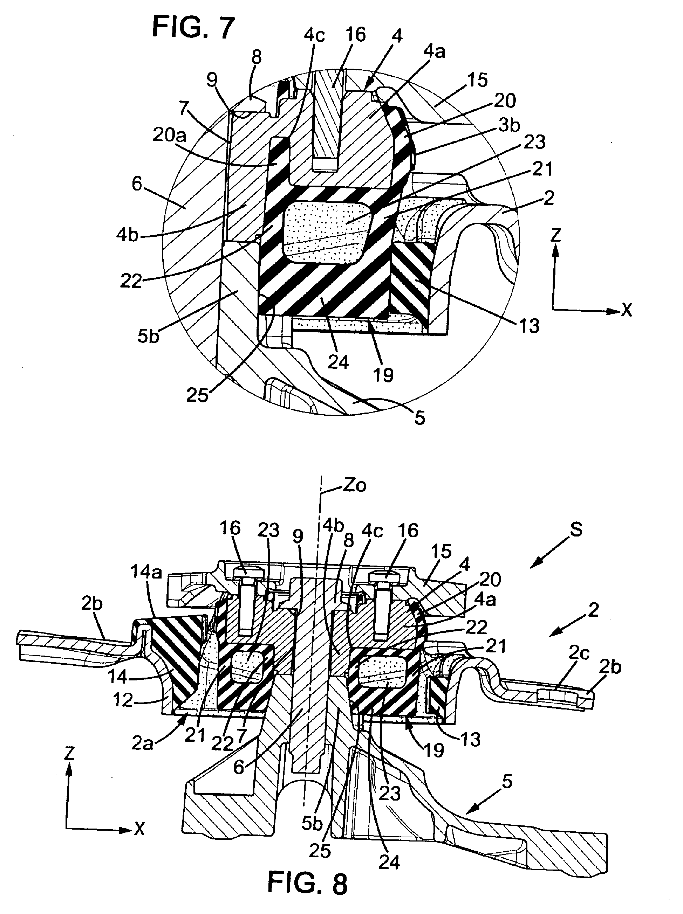

De plus, la contrebutée 13 ne coopère pas du tout par butée avec la tête rigide 4 de la première armature au contraire de l'art antérieur, mais uniquement avec la portion de butée correspondante 24 dans la direction X. Par conséquent, lorsque la première armature 1 est déplacée vers la contrebutée 13 (figure 7), la portion de butée 24 correspondante vient buter contre ladite contrebutée 13, ce qui déforme les parois flexibles 21, 22 correspondantes de la butée déformable 19, de sorte que la face intérieure 25 de ladite portion de butée 24 vient en appui contre la partie d'extrémité 5b de l'organe de liaison 5. Par conséquent, la limitation du mouvement de la première armature 1 dans la première direction X, vers la contrebutée 13, est obtenue sans générer de sollicitation en cisaillement entre la tête 4 et l'organe de liaison 5, avec les avantages déjà explicités précédemment.

Par ailleurs, le fonctionnement de la contrebutée 14 est similaire à celui de la contrebutée 13, si ce n'est que dans l'exemple représenté, la contrebutée 14 coopère par butée, à la fois avec la portion de butée correspondante 24 correspondante et avec la tête rigide 4 de la première armature, d'une façon similaire à l'art antérieur représenté sur la figure 1. Les efforts de cisaillement qui sont ainsi générés entre la tête 4 et l'organe de liaison 5 restent toutefois limités dans cet exemple particulier, dans la mesure où la première armature 1 du support antivibratoire est destinée à subir des efforts dynamiques horizontaux moins importants en direction de la contrebutée 13 qu'en direction de la contrebutée 14. Par conséquent, le fait que la contrebutée 14 vienne en appui simultané sur la tête 4 et sur la portion de butée 24 ne présente de conséquences dommageables dans ce cas de figure.

Bien entendu, le support antivibratoire selon l'invention pourrait également être conçu avec une contrebutée 14 ne venant en appui que contre la portion de butée 24 correspondante, comme la contrebutée 13.

Dans tous les cas, les déformations subies par les portions tombantes déformables 21-23 de la butée 19 peuvent être déformables élastiquement et/ou plastiquement lors du contact contre les contrebutées 13, 14.

Par ailleurs, on notera que dans toutes les formes de réalisation de l'invention, la butée déformable 19 pourrait être réalisée en un autre matériau que de la matière thermoplastique, par exemple en aluminium (avec une forme éventuellement similaire à celle représentée sur les dessins). De plus, la butée déformable 19 pourrait éventuellement être formée d'une seule pièce avec la tête 4. Enfin, la butée déformable 19 pourrait éventuellement être une pièce composite formée en plusieurs matériaux, par exemple avec une portion de tête 20 et des parois flexibles 21, 22 en caoutchouc et avec des portions de butée 24 en matière thermoplastique ou en aluminium, ou autre.

La deuxième forme de réalisation de l'invention, qui est représentée sur la figure 8, est très similaire à la première forme de réalisation et ne sera donc pas décrite à nouveau en détail ici.

Cette deuxième forme de réalisation de l'invention se distingue essentiellement de la première forme de réalisation par le fait que la partie d'extrémité 5b de l'organe de liaison 5, qui peut présenter par exemple une forme sensiblement tronconique évasée vers le bas, est engagée au contact de la surface intérieure 25 des portions de butées 24 de la butée déformable 19, en déformant ces portions de butée même en l'absence de contact entre les contrebutées 13, 14 et la portion de butée 24 correspondante. Dans ce cas, la butée mobile 19 permet, comme dans la forme de réalisation précédemment décrite, une certaine tolérance de positionnement relatif entre la tête 4 et l'organe de liaison 5 lors de leur assemblage, parallèlement à la première direction X, et ce grâce à la résilience du matériau constituant la butée déformable 19.

## Revendications

1. Support antivibratoire destiné à relier des premier et deuxième éléments de véhicule aux fins d'amortissement et de support, comprenant :
- une première armature (1) comportant une tête rigide (4) et un organe de liaison rigide (5) destiné à être fixé au premier élément de véhicule, l'organe de liaison (5) étant fixé rigidement à ladite tête (4) par une liaison (6) admettant une certaine tolérance de positionnement relatif entre ladite tête (4) et ledit organe de liaison (5) au moins selon une première direction (X),
- une deuxième armature rigide (2) destinée à être fixée au deuxième élément de véhicule,
- un corps en élastomère (3) reliant la tête (4) de la première armature à la deuxième armature (2) et adapté pour supporter une charge statique (F) appliquée à la première armature (1) selon une deuxième direction (Z) sensiblement perpendiculaire à la première direction (X) et pour permettre des mouvements relatifs entre les première et deuxième armatures au moins selon les première et deuxième directions (X, Z),
ladite deuxième armature (2) étant adaptée pour coopérer par butée avec la première armature (1) selon la première direction (X),
**caractérisé en ce que** la tête (4) comporte une butée déformable (19) qui est interposée entre la deuxième armature (2) et l'organe de liaison (5) selon la première direction (X), la butée déformable (19) étant adaptée pour ne pas gêner la tolérance de positionnement relatif entre la tête (4) de la première armature et l'organe de liaison (5), et ladite butée déformable (19) étant adaptée pour buter contre la deuxième armature (2) en prenant appui contre l'organe de liaison (5) pour limiter les mouvements relatifs entre les première et deuxième armatures (1, 2) selon ladite première direction (X).

2. Support antivibratoire selon la revendication 1, dans lequel la butée déformable (19) est réalisée au moins partiellement en matière synthétique.

3. Support antivibratoire selon la revendication 1 ou la revendication 2, dans lequel la butée déformable (19) est surmoulée sur la tête (4) de la première armature.

4. Support antivibratoire selon la revendication 1, dans lequel la butée déformable (19) est réalisée au moins partiellement en aluminium.

5. Support antivibratoire selon l'une quelconque des revendications précédentes, dans lequel la butée déformable (19) comporte une portion de tête (20) solidaire de la tête (4) de la première armature et une portion tombante (21-23) qui s'étend selon la deuxième direction (Z) vers l'organe de liaison (5) à partir de la portion de tête jusqu'à une portion de butée (24) interposée entre l'organe de liaison (5) et la deuxième armature (2) selon la première direction (X).

6. Support antivibratoire selon la revendication 5, dans lequel la portion tombante (21-23) de la butée déformable est flexible selon la première direction (X) et ladite portion de butée (24) est moins déformable que la portion tombante (21-23) dans la première direction (X).

7. Support antivibratoire selon la revendication 6, dans lequel la portion tombante (21-23) de la butée déformable comporte au moins une alvéole (23) permettant à ladite portion tombante d'être flexible selon la première direction (X).

8. Support antivibratoire selon l'une quelconque des revendications précédentes, dans lequel un jeu est ménagé entre la butée déformable (19) et l'organe de liaison (5) dans la première direction (X).

9. Support antivibratoire selon l'une quelconque des revendications 1 à 7, dans lequel l'organe de liaison (5) est en contact permanent avec la butée déformable (19) et exerce une déformation sur ladite butée déformable.

10. Support antivibratoire selon l'une quelconque des revendications précédentes, dans lequel la liaison entre la tête (4) de la première armature et l'organe de liaison (5) comporte au moins une vis (6) s'étendant selon la deuxième direction (Z), ladite vis traversant avec jeu radial au moins une pièce choisie parmi la tête (4) de la première armature et l'organe de liaison (5), l'organe de liaison et la tête de la première armature étant solidarisés rigidement ensemble par serrage de la vis (6).

11. Support antivibratoire selon l'une quelconque des revendications précédentes, dans lequel la deuxième armature (2) est annulaire et présente une ouverture (2a) traversée par la première armature (1) selon la deuxième direction (Z), ladite deuxième armature (2) présentant au moins un rebord (12) qui délimite au moins partiellement ladite ouverture (2a) et contre lequel bute ladite butée déformable (19).

12. Support antivibratoire selon la revendication précédente, dans lequel ledit rebord (12) comporte au moins une contrebutée (13, 14) en élastomère contre laquelle bute ladite butée déformable (19).

## Patentansprüche

1. Schwingungsdämpfungsvorrichtung, die dazu dient, ein erstes und ein zweites Fahrzeugelement zu Zwecken des Dämpfens und Tragens miteinander zu verbinden, wobei die Vorrichtung aufweist:
- ein erstes Trägerteil (1), das einen starren Kopf (4) und ein an dem ersten Fahrzeugelement anzubringendes starres Verbindungsglied (5) aufweist, wobei das Verbindungsglied (5) starr an dem Kopf (4) über eine Verbindung (6) befestigt ist, die eine gewisse relative Positionstoleranz zwischen dem Kopf (4) und dem Verbindungsglied (5) zumindest in eine erste Richtung (X) zulässt,
- ein an dem zweiten Fahrzeugelement anzubringendes starres zweites Trägerteil (2),
- einen Körper aus Elastomer (3), der den Kopf (4) des ersten Trägerteils mit dem zweiten Trägerteil (2) verbindet und angepasst ist, eine statische Last (F), die auf das erste Trägerteil (1) in eine zweite Richtung (Z), die im Wesentlichen senkrecht zur ersten Richtung (X) ist, ausgeübt wird, zu tragen und relative Bewegungen zwischen dem ersten und zweiten Trägerteil zumindest in die erste und zweite Richtung (X,Z) zu erlauben,
wobei das zweite Trägerteil (2) geeignet ist, über Anschlag mit dem ersten Trägerteil (1) in die erste Richtung (X) zusammenzuwirken,
**dadurch gekennzeichnet, dass** der Kopf (4) einen verformbaren Anschlag (19) aufweist, der in der ersten Richtung (X) zwischen dem zweiten Trägerteil (2) und dem Verbindungsglied (5) angeordnet ist, wobei der verformbare Anschlag (19) angepasst ist, die relative Positionstoleranz zwischen dem Kopf (4) des ersten Trägerteils und dem Verbindungsglied (5) nicht zu beeinträchtigen, und wobei der vorformbare Anschlag (19) angepasst ist, an dem zweiten Trägerteil (2) anzuschlagen, indem er zur Anlage an dem Verbindungsglied (5) kommt, um die Relativbewegungen zwischen dem ersten und zweiten Trägerteil (1,2) in die zweite Richtung (X) zu begrenzen.

2. Schwingungsdämpfungsvorrichtung nach Anspruch 1, in welcher der verformbare Anschlag (19) mindestens teilweise aus einem Kunststoffmaterial hergestellt ist.

3. Schwingungsdämpfungsvorrichtung nach Anspruch 1 oder Anspruch 2, in welcher der verformbare Anschlag (19) an den Kopf (4) des ersten Trägerteils geformt ist.

4. Schwingungsdämpfungsvorrichtung nach Anspruch 1, in welcher der verformbare Anschlag (19) mindestens teilweise aus Aluminium hergestellt ist.

5. Schwingungsdämpfungsvorrichtung nach einem der vorstehenden Ansprüche, in welcher der verformbare Anschlag (19) einen mit dem Kopf (4) des ersten Trägerteils fest verbundenen Kopfabschnitt (20) und einen herabhängenden Abschnitt (21-23) aufweist, der sich zwischen dem Kopfabschnitt (20) und einem Anschlagabschnitt (24), der zwischen dem Verbindungsglied (5) und dem zweiten Trägerteil (2) in die erste Richtung (X) angeordnet ist, in die zweite Richtung (Z) zum Verbindungsglied (5) erstreckt.

6. Schwingungsdämpfungsvorrichtung nach Anspruch 5, in welcher der herabhängende Abschnitt (21-23) des verformbaren Anschlags in die erste Richtung (X) biegsam ist und der Anschlagabschnitt (24) weniger verformbar in die erste Richtung (X) ist als der herabhängende Abschnitt (21-23).

7. Schwingungsdämpfungsvorrichtung nach Anspruch 6, in welcher der herabhängende Abschnitt (21-23) des verformbaren Anschlags mindestens eine Wabe (23) aufweist, die dem herabhängenden Abschnitt eine Biegsamkeit in die erste Richtung (X) verleiht.

8. Schwingungsdämpfungsvorrichtung nach einem der vorstehenden Ansprüche, in welcher in der ersten Richtung (X) ein Spielraum zwischen dem verformbaren Anschlag (19) und dem Verbindungsglied (5) ausgespart ist.

9. Schwingungsdämpfungsvorrichtung nach einem der Ansprüche 1 bis 7, in welcher das Verbindungsglied (5) in ständigem Kontakt mit dem verformbaren Anschlag (19) ist und auf den verformbaren Anschlag eine Verformung ausübt.

10. Schwingungsdämpfungsvorrichtung nach einem der vorstehenden Ansprüche, in welcher die Verbindung zwischen dem Kopf (4) des ersten Trägerteils und dem Verbindungsglied (5) mindestens eine Schraube (6) aufweist, die sich in die zweite Richtung (Z) erstreckt, wobei sich die Schraube durch den Kopf (4) des ersten Trägerteils mit einem radialen Spiel erstreckt und/oder durch das Verbindungsglied (5) mit einem radialen Spiel erstreckt, wobei das Verbindungsglied (5) und der Kopf (4) des ersten Trägerteils durch Anziehen der Schraube (5) starr miteinander verbunden sind.

11. Schwingungsdämpfungsvorrichtung nach einem der vorstehenden Ansprüche, in welcher das zweite Trägerteil (2) ringförmig ist und eine Öffnung (2a) aufweist, durch welche sich das erste Trägerteil (1) in die zweite Richtung (Z) erstreckt, wobei das zweite Trägerteil (2) mindestens eine Randleiste (12) aufweist, die mindestens teilweise die Öffnung (2a) begrenzt und an welcher der verformbare Anschlag (19) anschlägt.

12. Schwingungsdämpfungsvorrichtung nach dem vorstehenden Anspruch, in welcher die Randleiste (12) mindestens einen Gegenanschlag (13,14) aus Elastomer aufweist, an welchem der verformbare Anschlag (19) anschlägt.

## Claims

1. Anti-vibration mount intended to connect first and second vehicle components for the purposes of shock absorption and support, comprising:
- a first mounting member (1) comprising a rigid head (4) and a rigid connector (5) intended to be fixed to the first vehicle component, the connector (5) being fixed rigidly to said head (4) by a connection (6) permitting a degree of relative positioning tolerance between said head (4) and said connector (5) at least in a first direction (X),
- a second rigid mounting member (2) intended to be fixed to the second vehicle component,
- an elastomer body (3) connecting the head (4) of the first mounting member to the second mounting member (2) and capable of supporting a static load (F) applied to the first mounting member (1) in a second direction (Z) approximately perpendicular to the first direction (X) and of allowing relative movements between the first and second mounting members at least in the first and second directions (X, Z),
said second mounting member (2) being capable of cooperating by abutment with the first mounting member (1) in the first direction (X, Z),
**characterized in that** the head (4) comprises a deformable stop (19) that is interposed between the second mounting member (2) and the connector (5) in the first direction (X), the deformable stop (19) being capable of not obstructing the relative positioning tolerance between the head (4) of the first mounting member and the connector (5), and said deformable stop (19) being capable of abutting against the second mounting member (2) by pressing against the connector (5) in order to limit the relative movements between the first and second mounting members (1, 2) in said first direction (X).

2. Anti-vibration mount according to claim 1, in which the deformable stop (19) is made at least partly from a synthetic material.

3. Anti-vibration mount according to claim 1 or claim 2, in which the deformable stop (19) is overmoulded on the head (4) of the first mounting member.

4. Anti-vibration mount according to claim 1, in which the deformable stop (19) is made at least partly from aluminium.

5. Anti-vibration mount according to any one of the preceding claims, in which the deformable stop (19) comprises a head portion (20) integral with the head (4) of the first mounting member and a descending portion (21-23) that extends in the second direction (Z) towards the connector (5) from the head portion to a stop portion (24) interposed between the connector (5) and the second mounting member (2) in the first direction (X).

6. Anti-vibration mount according to claim 5, in which the descending portion (21-23) of the deformable stop is flexible in the first direction (X) and said stop portion (24) is less deformable than the descending portion (21-23) in the first direction (X).

7. Anti-vibration mount according to claim 6, in which the descending portion (21-23) of the deformable stop comprises at least one cavity (23) allowing said descending portion to be flexible in the first direction (X).

8. Anti-vibration mount according to any one of the preceding claims, in which play is arranged between the deformable stop (19) and the connector (5) in the first direction (X).

9. Anti-vibration mount according to any one of claims 1-7, in which the connector (5) is in permanent contact with the deformable stop (19) and exerts deformation on said deformable stop.

10. Anti-vibration mount according to any one of the preceding claims, in which the connection between the head (4) of the first mounting member and the connector (5) comprises at least one screw (6) extending in the second direction (Z), said screw passing with radial play through at least one part chosen from the head (4) of the first mounting member and the connector (5), the connector and the head of the first mounting member being rigidly secured to each other by tightening of the screw (6).

11. Anti-vibration mount according to any one of the preceding claims, in which the second mounting member (2) is annular and has an opening (2a) through which the first mounting member (1) passes in the second direction (Z), said second mounting member (2) having at least one flange (12) that at least partly delimits said opening (2a) and against which said deformable stop (19) abuts.

12. Anti-vibration mount according to the preceding claim, in which said flange (12) comprises at least one elastomer thrust pad (13, 14) against which said deformable stop (19) abuts.
